# EUROPÄISCHE PATENTSCHRIFT

(11) **EP 4 599 177 B1**
(45) Veröffentlichungstag und Bekanntmachung des Hinweises auf die Patenterteilung: **23.09.2026**
(21) Anmeldenummer: 23786034.1
(22) Anmeldetag: 05.10.2023
(51) Int. Cl.: F16K 31/08, F16K 31/385, F16K 31/56, F16K 31/60, F16K 31/524

(54) **VENTIL MIT VENTILEINHEIT UND DRUCKTASTENGEHÄUSE MIT BETÄTIGUNGSKNOPF**
VALVE WITH VALVE UNIT AND PUSHBUTTON HOUSING WITH ACTUATING BUTTON
SOUPAPE DOTÉE D'UNE UNITÉ DE SOUPAPE ET BOÎTIER À BOUTON-POUSSOIR DOTÉ D'UN BOUTON D'ACTIONNEMENT

(30) Priorität: 05.10.2022 DE 102022125635
(43) Veröffentlichungstag der Anmeldung: 13.08.2025
(73) Patentinhaber: Grohe AG, 58675 Hemer (DE)
(72) Erfinder: BUCHMUELLER, Janik, 44141 Dortmund (DE)
(86) Internationale Anmeldenummer: PCT/EP2023/077561
(87) Internationale Veröffentlichungsnummer: WO 2024/074610

(56) Entgegenhaltungen:
- EP-A1- 1 903 267
- DE-A1- 102017 105 200
- DE-A1- 102019 103 609

## Beschreibung

Die vorliegende Erfindung betrifft ein Ventil einer Sanitärarmatur. Solche Sanitärarmaturen dienen der bedarfsgerechten Bereitstellung einer Flüssigkeit zum Beispiel an Duschen, Badewannen, Spülbecken oder Waschbecken.

Mit einem (Steuer-)Ventil kann die Flüssigkeit beispielsweise unterschiedlichen Strahlbildnern der Sanitärarmatur, beispielsweise einer Brause einer Dusche, zuführbar sein. Mittels der Strahlbildner ist die Flüssigkeit durch die Sanitärarmatur mit unterschiedlichen Strahlarten, beispielsweise Vollstrahlen, Regenstrahlen, Massagestrahlen, etc., abgebbar. Weiterhin kann die Flüssigkeit mit dem Ventil auch unterschiedlichen Flüssigkeitsausläufen einer Sanitärarmatur zuführbar sein. Beispielsweise kann die Flüssigkeit durch das Ventil einem Wannenauslauf einer Badewanne und/oder einer Handbrause gezielt zuführbar sein.

Ein Ventil, über das lediglich ein Volumenstrom einstellbar und das per Knopfdruck verschließbar und zu öffnen ist, ist z. B. aus der EP 1903 267 A1 bekannt.

Es sind Ventile bekannt, bei denen der Volumenstrom per Knopfdruck ein- und ausschaltbar und darüber hinaus über den Betätigungsknopf verstellbar ist. Dabei ist der Betätigungsknopf zur Einstellung des Volumenstroms zu verdrehen. Häufig ist der Hub des Betätigungsknopfes zwischen der Ausgangsstellung (Ventil geschlossen) und einer Betätigungsstellung (Ventil offen) nur gering, so dass eine zugängliche Länge des Betätigungsknopfes für eine einwandfreie Bedienung durch einen Benutzer nicht ausreicht.

Aufgabe der Erfindung ist daher, die mit Bezug auf den Stand der Technik geschilderten Probleme zumindest teilweise zu lösen und insbesondere ein Ventil bereitzustellen, bei dem eine ausreichende für einen Benutzer zugängliche Länge zur Einstellung eines Volumenstroms bereitgestellt werden kann.

Diese Aufgaben werden gelöst mit einem Ventil gemäß den Merkmalen des unabhängigen Patentanspruchs. Weitere vorteilhafte Ausgestaltungen des Ventils sind in den abhängigen Patentansprüchen angegeben. Es ist darauf hinzuweisen, dass die in den abhängigen Patentansprüchen einzeln aufgeführten Merkmale in beliebiger, technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Es wird ein Ventil für eine Sanitärarmatur vorgeschlagen, zumindest aufweisend:
- eine Ventileinheit mit einem Ventilgehäuse und einem Zuflussanschluss sowie einem Abflussanschluss zur Weiterleitung des über den Zuflussanschluss zugeführten Fluids, wobei durch die Ventileinheit der Zuflussanschluss und der Abflussanschluss schaltbar miteinander verbindbar sind, wobei der Zuflussanschluss und der Abflussanschluss in einer ersten Stellung der Ventileinheit fluidtechnisch voneinander getrennt und in einer zweiten Stellung miteinander verbunden sind; und
- ein Drucktastengehäuse, das mit dem Ventilgehäuse verbunden ist und einen Betätigungsknopf zum Schalten der Ventileinheit aufweist, wobei der Betätigungsknopf in einer Ausgangsstellung (des Ventils bzw. des Drucktastengehäuses) durch einen ersten Haltemechanismus gehalten ist.

Ausgehend von dieser Ausgangsstellung ist durch ein Verlagern des Betätigungsknopfes entlang einer axialen ersten Richtung um eine erste Strecke ein zweiter Haltemechanismus der Ventileinheit betätigbar, durch den die Ventileinheit zwischen der ersten Stellung und der zweiten Stellung schaltbar ist. Der erste Haltemechanismus weist eine erste Feder und der zweite Haltemechanismus eine zweite Feder auf, die in der Ausgangsstellung und in der ersten Stellung jeweils gegenüber der axialen Richtung vorgespannt sind. Durch eine Betätigung des zweiten Haltemechanismus ist (wird) die zweite Feder zumindest teilweise entspannt und verlagert damit zumindest einen Teil der Ventileinheit entlang einer axialen zweiten Richtung um eine zweite Strecke und schaltet so die Ventileinheit. Durch die Entspannung der zweiten Feder ist der erste Haltemechanismus betätigbar und damit entspannt sich die erste Feder zumindest teilweise und verlagert damit den Betätigungsknopf entlang der axialen zweiten Richtung um eine dritte Strecke hin zu einer Betätigungsstellung.

Es wird also neben dem üblicherweise vorhandenen (zweiten) Haltemechanismus der Ventileinheit ein weiterer (erster) Haltemechanismus vorgeschlagen. Diese Haltemechanismen weisen jeweils eine Feder auf, die in einer Ausgangsstellung des Ventils vorgespannt sind. Bei der Betätigung des Betätigungsknopfes werden die Federn zumindest teilweise entspannt, wobei der Betätigungsknopf (zunächst) durch die zweite Feder und (dann bzw. dann auch) durch die erste Feder entlang der zweiten axialen Richtung verlagert wird. Durch die zusätzliche erste Feder kann (relativ) unabhängig vom erforderlichen Hub der Ventileinheit der Betätigungsknopf so weit wie notwendig verlagert werden, so dass eine ausreichende für einen Benutzer zugängliche Länge des Betätigungsknopfes zur Einstellung eines Volumenstroms und/oder zur Regelung einer Temperatur bereitgestellt werden kann.

Das Ventil ist beispielsweise in einer Sanitärarmatur angeordnet oder über Schlauchleitungen und/oder Rohrleitungen mit einer Sanitärarmatur verbindbar. Sanitärarmaturen dienen der bedarfsgerechten Bereitstellung einer Flüssigkeit, insbesondere Wasser, an beispielsweise Duschen, Badewannen, Spülbecken oder Waschbecken. Das Ventil kann insbesondere zumindest teilweise unter Putz bzw. zumindest teilweise in einer Wand oder einem Träger angeordnet sein.

Das Ventil (bzw. die Ventileinheit) umfasst ein Ventilgehäuse mit zumindest einem Zulauf (Zuflussanschluss), über den das Ventil an eine Flüssigkeitsquelle, zum Beispiel ein öffentliches Flüssigkeitsversorgungsnetz, anschließbar ist. Dem zumindest einen Zulauf kann ein Mischventil oder eine Mischkartusche vorgeschaltet sein, mit dem ein Kaltwasser mit einer Kaltwassertemperatur und ein Warmwasser mit einer Warmwassertemperatur zu einem Mischwasser mit einer gewünschten Mischwassertemperatur mischbar ist. Die Kaltwassertemperatur beträgt insbesondere maximal 25 °C (Celsius), bevorzugt 1 °C bis 25 °C, besonders bevorzugt 5 °C bis 20 °C und/oder die Warmwassertemperatur insbesondere maximal 90 °C, bevorzugt 25 °C bis 90 °C, besonders bevorzugt 55 °C bis 65 °C. Das Ventilgehäuse kann mehrteilig ausgebildet sein. Weiterhin kann das Ventilgehäuse zumindest teilweise aus Kunststoff und/oder Metall, wie zum Beispiel Messing, bestehen.

Insbesondere ist die dritte Strecke größer als die zweite Strecke und/oder die zweite Strecke größer ist als die erste Strecke.

Die erste Strecke bezeichnet insbesondere die Verlagerung des Betätigungsknopfes entlang der axialen ersten Richtung. Erst wenn diese erste Strecke erreicht oder überwunden ist, wird der zweite Haltemechanismus (automatisch bzw. unmittelbar) ausgelöst bzw. geöffnet. Dieser ist insbesondere in bekannter Weise ausgeführt, wobei durch die Verlagerung entlang der ersten Richtung auch eine Verdrehung eines Teils des zweiten Haltemechanismus bewirkt wird, wobei infolge dieser Verdrehung eine Arretierung des zweiten Haltemechanismus gelöst und die zweite Feder sich zumindest teilweise entspannt. Bei der Entspannung der zweiten Feder werden Teile der Ventileinheit und der Betätigungsknopf entlang der axialen zweiten Richtung (der ersten Richtung entgegengesetzt) bewegt.

Während der Verlagerung des Betätigungsknopfes entlang der ersten Richtung wird die erste Feder insbesondere weiter vorgespannt.

Insbesondere werden durch die zweite Feder die Teile der Ventileinheit und der Betätigungsknopf entlang der axialen zweiten Richtung um die zweite Strecke verlagert. Die zweite Strecke ist insbesondere größer als die erste Strecke, so dass der erste Haltemechanismus (also nach Zurücklegen der ersten Strecke, die kleiner ist als die zweite Strecke) durch eine gemeinsame Federkraft der (nicht mehr arretierten) zweiten Feder und der ersten Feder betätigbar ist. Im Anschluss an die zweite Strecke wird insbesondere "zumindest" oder sogar bevorzugt "nur" der Betätigungsknopf entlang der zweiten Richtung (weiter-)verlagert. Diese Verlagerung um die dritte Strecke erfolgt insbesondere ausschließlich durch die erste Federkraft.

Insbesondere ist der Betätigungsknopf in der Betätigungsstellung gegenüber der Ausgangsstellung um mindestens 10 Millimeter, bevorzugt um mindestens 12, besonders bevorzugt um mindestens 14 Millimeter oder sogar um 15 Millimeter, entlang der axialen zweiten Richtung verlagert.

Insbesondere beträgt die erste Stecke ca. 5 Millimeter, die zweite Strecke ca. 7 Millimeter und die dritte Strecke ca. 8. Millimeter.

Insbesondere ist ausgehend von der Betätigungsstellung der Betätigungsknopf entlang der ersten axialen Richtung zumindest um die dritte Strecke und um die zweite Strecke verlagerbar und spannt dabei die erste Feder und die zweite Feder vor sowie überführt die Ventileinheit in die erste Stellung.

Insbesondere umfasst der erste Haltemechanismus einen Magneten sowie eine Metallscheibe, wobei eine magnetische Kraft zwischen Magnet und Metallscheibe größer ist als die (in der Ausgangsstellung vorliegende) Vorspannung der ersten Feder.

Insbesondere ist der Magnet an dem Betätigungsknopf befestigt. Alternativ kann aber auch die Metallscheibe an dem Betätigungsknopf befestigt sein.

Insbesondere ist eine Summe der Vorspannungen der ersten Feder und der zweiten Feder (insbesondere nach Zurücklegen der ersten Strecke während der Rückverlagerung entlang der zweiten Richtung) größer als die magnetische Kraft.

Insbesondere ist der Magnet mit dem Betätigungsknopf verbunden und die Metallscheibe durch einen Anschlag zumindest gegenüber der zweiten axialen Richtung formschlüssig aber entlang der axialen Richtung verlagerbar in dem Drucktastengehäuse aufgenommen. Die Metallscheibe kontaktiert in der Ausgangstellung den Magneten. Die Metallscheibe ist durch den Betätigungsknopf (ausgehend von dem Anschlag) entlang der axialen ersten Richtung verlagerbar, wobei bei der Betätigung des zweiten Haltemechanismus der Betätigungsknopf und damit auch die Metallscheibe durch die Entspannung der zweiten Feder entlang der axialen zweiten Richtung verlagerbar sind. Dabei ist die Metallscheibe durch den Anschlag zurückhaltbar bzw. wird durch den Anschlag zurückgehalten, so dass sich dadurch die Verbindung zwischen Magnet und Metallscheibe löst und der Betätigungsknopf weiter entlang der axialen zweiten Richtung verlagerbar ist.

Der Anschlag ist insbesondere an dem Drucktastengehäuse angeordnet. Der Anschlag begrenzt insbesondere eine (ringförmige) Kammer gegenüber der zweiten axialen Richtung, wobei innerhalb der Kammer die Metallplatte entlang der axialen Richtung verlagerbar ist. In der Ausgangsstellung drückt die vorgespannte erste Feder den Betätigungsknopf in Richtung der zweiten Richtung. Der über den Magneten mit der Metallplatte verbundene Betätigungsknopf wird damit durch den Anschlag in der Ausgangsstellung gehalten.

Magnet und Metallplatte können insbesondere auch vertauscht angeordnet sein, d. h. der Magnet als verlagerbare Platte in der Kammer und die Metallplatte verbunden mit dem Betätigungsknopf.

Insbesondere ist ausgehend von der Betätigungsstellung der Betätigungsknopf entlang der ersten axialen Richtung zumindest um die dritte Strecke und um die zweite Strecke verlagerbar, spannt dabei die erste Feder und die zweite Feder vor und überführt die Ventileinheit (zurück) in die erste Stellung. Dabei (nach Zurücklegen der zweiten und der dritten Strecke) kontaktiert der Magnet die Metallscheibe. Nach dann erfolgender Rückverlagerung des Betätigungsknopfes um die erste Strecke ist die Metallscheibe durch den Anschlag zurückhaltbar bzw. wird die Metallscheibe (und damit der Betätigungsknopf) durch den Anschlag zurückgehalten.

Insbesondere weist das Ventil eine Volumenstromregeleinheit zur Einstellung eines Volumenstroms des Fluids in der zweiten Stellung auf (also wenn das Ventil in der zweiten Stellung angeordnet ist). Die Volumenstromregeleinheit weist ein drehbares Bedienteil auf, das mit dem Betätigungsknopf über eine gegenüber einer Umfangsrichtung formschlüssige Verbindung verbunden ist. Das Bedienteil ist über eine Gewindehülse mit der Ventileinheit verbunden, so dass durch eine Verdrehung des Bedienteils ein Betätigungselement der Ventileinheit entlang der axialen Richtung zur Veränderung eines Durchströmungsquerschnitts zwischen dem Zuflussanschluss und dem Abflussanschluss (insbesondere nach Art eines Gewindetriebs) verlagerbar ist.

Insbesondere weist das Drucktastengehäuse an einem Ende eine Öffnung auf, durch die hindurch der Betätigungsknopf betätigbar ist. Der Betätigungsknopf schließt in der Ausgangsstellung bündig mit dem Ende ab und steht in der Betätigungsstellung entlang der axialen Richtung um mindestens 10 Millimeter, bevorzugt um mindestens 12 Millimeter, besonders bevorzugt um mindestens 14 Millimeter oder sogar um 15 Millimeter, über das Ende hervor.

Dieser Überstand gewährleistet eine ausreichende für einen Benutzer zugängliche Länge zur Einstellung bzw. Regelung eines Volumenstroms über den Betätigungsknopf.

Das Drucktastengehäuse kann mit dem Ventilgehäuse über ein Gewinde verbunden sein.

Gemäß einem weiteren Aspekt wird eine Sanitärarmatur, umfassend ein hier vorgestelltes Ventil vorgeschlagen. Dies gilt ebenso für ein Set aus Sanitärarmatur und Ventil.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figur näher erläutert. Es ist darauf hinzuweisen, dass die Erfindung durch das angeführte Ausführungsbeispiel nicht beschränkt werden soll. Insbesondere ist es, soweit nicht explizit anders dargestellt, auch möglich, Teilaspekte der in der Figur erläuterten Sachverhalte zu extrahieren und mit anderen Bestandteilen und Erkenntnissen aus der vorliegenden Beschreibung zu kombinieren. Insbesondere ist darauf hinzuweisen, dass die Figur und insbesondere die dargestellten Größenverhältnisse nur schematisch sind.

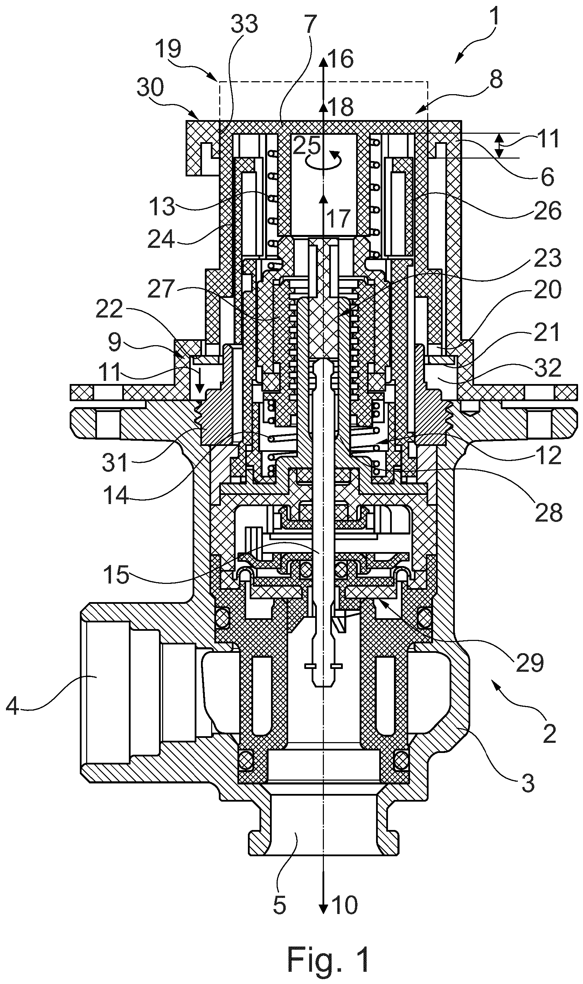

Fig. 1 zeigt ein Ventil 1, mit Volumenstromregeleinheit 23 und Betätigungsknopf 7, in einem Längsschnitt.

Das Ventil 1 umfasst eine Ventileinheit 2 mit einem Ventilgehäuse 3 und einem Zuflussanschluss 4 sowie einem Abflussanschluss 5 zur Weiterleitung des über den Zuflussanschluss 4 zugeführten Fluids, wobei durch die Ventileinheit 2 der Zuflussanschluss 4 und der Abflussanschluss 5 schaltbar miteinander verbindbar sind, wobei der Zuflussanschluss 4 und der Abflussanschluss 5 in der dargestellten ersten Stellung der Ventileinheit 2 fluidtechnisch voneinander getrennt und in einer zweiten Stellung (hier nicht dargestellt) miteinander verbunden sind. Das Ventil 1 umfasst weiter ein Drucktastengehäuse 6, die mit dem Ventilgehäuse 2 verbunden ist und einen Betätigungsknopf 7 zum Schalten der Ventileinheit 2 aufweist, wobei der Betätigungsknopf 7 in einer Ausgangsstellung 8 (des Ventils 1 bzw. das Drucktastengehäuse 6) durch einen ersten Haltemechanismus 9 gehalten ist. Das Drucktastengehäuse 6 ist mit dem Ventilgehäuse 3 über ein Gewinde 31 verbunden.

Ausgehend von der Ausgangsstellung 8 (Betätigungsknopf 7 ist bündig am Ende 30 des Drucktastengehäuses 6 angeordnet) ist durch ein Verlagern des Betätigungsknopfes 7 entlang einer axialen ersten Richtung 10 um eine erste Strecke 11 ein zweiter Haltemechanismus 12 der Ventileinheit 2 betätigbar, durch den die Ventileinheit 2 zwischen der ersten Stellung und der zweiten Stellung schaltbar ist. Der erste Haltemechanismus 9 weist eine erste Feder 13 und der zweite Haltemechanismus 12 eine zweite Feder 14 auf, die in der Ausgangsstellung 8 und in der ersten Stellung jeweils gegenüber der axialen Richtung 10, 16 vorgespannt sind. Durch die Betätigung des zweiten Haltemechanismus 12 ist (wird) die zweite Feder 14 zumindest teilweise entspannt und verlagert damit zumindest einen Teil 15 der Ventileinheit 2 entlang einer axialen zweiten Richtung 16 um eine zweite Strecke 17 und schaltet so die Ventileinheit 2. Durch die Entspannung der zweiten Feder 14 ist der erste Haltemechanismus 9 betätigbar und damit entspannt sich die erste Feder 13 zumindest teilweise und verlagert damit den Betätigungsknopf 7 entlang der axialen zweiten Richtung 16 um eine dritte Strecke 18 hin zu einer Betätigungsstellung 19 (angedeutet in Fig. 1, Betätigungsknopf 7 weist einen Überstand gegenüber dem Ende 30 auf).

Es wird also neben dem üblicherweise vorhandenen (zweiten) Haltemechanismus 12 der Ventileinheit 2 ein weiterer (erster) Haltemechanismus 9 vorgeschlagen. Diese Haltemechanismen 9, 12 weisen jeweils eine Feder 13, 14 auf, die in einer Ausgangsstellung 8 des Ventils 1 vorgespannt sind. Bei der Betätigung des Betätigungsknopfes 7 werden die Federn 13, 14 zumindest teilweise entspannt, wobei der Betätigungsknopf 7 (zunächst) durch die zweite Feder 14 und (dann bzw. dann auch) durch die erste Feder 13 entlang der zweiten axialen Richtung 16 verlagert wird. Durch die zusätzliche erste Feder 13 kann (relativ) unabhängig vom erforderlichen Hub der Ventileinheit 2 der Betätigungsknopf 7 so weit wie notwendig verlagert werden, so dass eine ausreichende für einen Benutzer zugängliche Länge des Betätigungsknopfes 7 (der Überstand) zur Einstellung eines Volumenstroms und/oder zur Regelung einer Temperatur bereitgestellt werden kann.

Die erste Strecke 11 bezeichnet die Verlagerung des Betätigungsknopfes 7 entlang der axialen ersten Richtung 10. Diese erste Strecke 11 ist erforderlich, um den zweiten Haltemechanismus 12 zu lösen. Dieser ist in bekannter Weise ausgeführt, wobei durch die Verlagerung entlang der ersten Richtung 10 auch eine Verdrehung eines Teils des zweiten Haltemechanismus 12 bewirkt wird, wobei infolge dieser Verdrehung eine Arretierung des zweiten Haltemechanismus 12 gelöst und die zweite Feder 14 sich zumindest teilweise entspannt. Bei der Entspannung der zweiten Feder 14 werden Teile 15 der Ventileinheit 2 und der Betätigungsknopf 7 entlang der axialen zweiten Richtung 16 (der ersten Richtung 10 entgegengesetzt) bewegt.

Während der Verlagerung des Betätigungsknopfes 7 entlang der ersten Richtung 10 wird die erste Feder 13 weiter vorgespannt.

Es werden durch die zweite Feder 14 die Teile 15 der Ventileinheit 2 und der Betätigungsknopf 7 entlang der axialen zweiten Richtung 16 um die zweite Strecke 17 verlagert. Die zweite Strecke 17 ist größer als die erste Strecke 11, so dass der erste Haltemechanismus 9 durch eine gemeinsame Federkraft der (nicht mehr arretierten) zweiten Feder 14 und der ersten Feder 13 betätigbar ist. Im Anschluss an die zweite Strecke 17 wird nur der Betätigungsknopf 7 entlang der zweiten Richtung 16 weiterverlagert. Diese Verlagerung um die dritte Strecke 18 erfolgt ausschließlich durch die Federkraft der ersten Feder 13.

Der Betätigungsknopf 7 ist in der Betätigungsstellung 19 gegenüber der Ausgangsstellung 8 um ca. 15 Millimeter entlang der axialen zweiten Richtung 16 verlagert.

Ausgehend von der Betätigungsstellung 19 ist der Betätigungsknopf 7 entlang der axialen ersten Richtung 10 zumindest um die dritte Strecke 18 und um die zweite Strecke 17 verlagerbar und spannt dabei die erste Feder 13 und die zweite Feder 14 vor sowie überführt die Ventileinheit 2 in die erste Stellung.

Der erste Haltemechanismus 9 umfasst einen Magneten 20 sowie eine Metallscheibe 21, wobei eine magnetische Kraft zwischen Magnet 20 und Metallscheibe 21 größer ist als die in der Ausgangsstellung 8 vorliegende Vorspannung der ersten Feder 13. Der Magnet 20 ist an dem Betätigungsknopf 7 befestigt.

Eine Summe der Vorspannungen der ersten Feder 13 und der zweiten Feder 14 ist, also nach Betätigung des zweiten Haltemechanismus 12 und nach Zurücklegen der ersten Strecke 11 entlang der axialen zweiten Richtung16, wenn also der Magnet 20 den Anschlag 22 kontaktiert, größer ist als die magnetische Kraft.

Der Magnet 20 ist mit dem Betätigungsknopf 7 verbunden und die Metallscheibe 21 ist durch einen Anschlag 22 gegenüber der zweiten axialen Richtung 16 formschlüssig aber (ausgehend von dem Anschlag 22) entlang der axialen ersten Richtung 10 verlagerbar in dem Drucktastengehäuse 6 aufgenommen. Die Metallscheibe 21 kontaktiert in der Ausgangstellung 8 den Magneten 20 und den Anschlag 22. Die Metallscheibe 21 ist durch den Betätigungsknopf 7 (ausgehend von dem Anschlag 22) entlang der axialen ersten Richtung 10 verlagerbar, wobei bei der Betätigung des zweiten Haltemechanismus 12 der Betätigungsknopf 7 und damit auch die Metallscheibe 21 durch die Entspannung der zweiten Feder 14 entlang der axialen zweiten Richtung 16 (rück-)verlagerbar sind. Dabei ist die Metallscheibe 21 durch den Anschlag 22 zurückhaltbar bzw. wird durch den Anschlag 22 zurückgehalten, so dass sich dadurch die Verbindung zwischen Magnet 20 und Metallscheibe 21 löst und der Betätigungsknopf 7 weiter entlang der axialen zweiten Richtung 16 verlagerbar ist.

Der Anschlag 22 ist an dem Drucktastengehäuse 6 angeordnet. Der Anschlag 22 begrenzt eine (ringförmige) Kammer 32 gegenüber der zweiten axialen Richtung 16, wobei innerhalb der Kammer 32 die Metallplatte 21 entlang der axialen Richtung 10, 16 verlagerbar ist. In der Ausgangsstellung 8 drückt die vorgespannte erste Feder 13 den Betätigungsknopf 7 in Richtung der zweiten Richtung 16. Der über den Magneten 20 mit der Metallplatte 21 verbundene Betätigungsknopf 7 wird damit durch den Anschlag 22 in der Ausgangsstellung 8 gehalten.

Ausgehend von der Betätigungsstellung 19 ist der Betätigungsknopf 7 entlang der axialen ersten Richtung 10 um die dritte Strecke 18 und um die zweite Strecke 17 verlagerbar, spannt dabei die erste Feder 13 und die zweite Feder 14 vor und überführt die Ventileinheit 2 (zurück) in die erste Stellung. Dabei (nach Zurücklegen der zweiten und der dritten Strecke 17, 18) kontaktiert der Magnet 20 die Metallscheibe 21. Nach dann erfolgender Rückverlagerung des Betätigungsknopfes 7 um die erste Strecke 11 ist die Metallscheibe 21 durch den Anschlag 22 zurückhaltbar bzw. wird die Metallscheibe 21 (und damit der Betätigungsknopf 7) durch den Anschlag 22 zurückgehalten. Der zweite Haltemechanismus 12 wird dabei in bekannterweise erneut arretiert.

Das Ventil 1 weist eine Volumenstromregeleinheit 23 zur Einstellung eines Volumenstroms des Fluids in der zweiten Stellung auf (also, wenn das Ventil 1 in der zweiten Stellung angeordnet ist). Die Volumenstromregeleinheit 23 weist ein drehbares Bedienteil 24 auf, das mit dem Betätigungsknopf 7 über eine gegenüber einer Umfangsrichtung 25 formschlüssige Verbindung 26 verbunden ist. Das Bedienteil 24 ist über eine Gewindehülse 27 mit der Ventileinheit 2 verbunden, so dass durch eine Verdrehung des Bedienteils 24 ein Betätigungselement 28 der Ventileinheit 2 entlang der axialen Richtung 10, 16 zur Veränderung eines Durchströmungsquerschnitts 29 zwischen dem Zuflussanschluss 4 und dem Abflussanschluss 5 (insbesondere nach Art eines Gewindetriebs) verlagerbar ist.

Das Drucktastengehäuse 6 weist an einem Ende 30 eine Öffnung 33 auf, durch die hindurch der Betätigungsknopf 7 betätigbar ist. Der Betätigungsknopf 7 schließt in der Ausgangsstellung 8 bündig mit dem Ende 30 ab und steht in der Betätigungsstellung 19 entlang der axialen Richtung 10, 16 um 15 Millimeter über das Ende 30 hervor.

Dieser Überstand gewährleistet eine ausreichende für einen Benutzer zugängliche Länge zur Einstellung bzw. Regelung eines Volumenstroms über den Betätigungsknopf 7.

### Bezugszeichenliste

- 1: Ventil
- 2: Ventileinheit
- 3: Ventilgehäuse
- 4: Zuflussanschluss
- 5: Abflussanschluss
- 6: Drucktastengehäuse
- 7: Betätigungsknopf
- 8: Ausgangsstellung
- 9: erster Haltemechanismus
- 10: erste Richtung
- 11: erste Strecke
- 12: zweiter Haltemechanismus
- 13: erste Feder
- 14: zweite Feder
- 15: Teil
- 16: zweite Richtung
- 17: zweite Strecke
- 18: dritte Strecke
- 19: Betätigungsstellung
- 20: Magnet
- 21: Metallscheibe
- 22: Anschlag
- 23: Volumenstromregeleinheit
- 24: Bedienteil
- 25: Umfangsrichtung
- 26: Verbindung
- 27: Gewindehülse
- 28: Betätigungselement
- 29: Durchströmungsquerschnitt
- 30: Ende
- 31: Gewinde
- 32: Kammer

## Patentansprüche

1. Ventil (1) für eine Sanitärarmatur, zumindest aufweisend:
- eine Ventileinheit (2) mit einem Ventilgehäuse (3) und einem Zuflussanschluss (4) sowie einem Abflussanschluss (5) zur Weiterleitung des über den Zuflussanschluss (4) zugeführten Fluids, wobei durch die Ventileinheit (2) der Zuflussanschluss (4) und der Abflussanschluss (5) schaltbar miteinander verbindbar sind, wobei der Zuflussanschluss (4) und der Abflussanschluss (5) in einer ersten Stellung der Ventileinheit (2) fluidtechnisch voneinander getrennt und in einer zweiten Stellung miteinander verbunden sind; und
- ein Drucktastengehäuse (6), das mit dem Ventilgehäuse (3) verbunden ist und einen Betätigungsknopf (7) zum Schalten der Ventileinheit (2) aufweist, wobei der Betätigungsknopf (7) in einer Ausgangsstellung (8) durch einen ersten Haltemechanismus (9) gehalten ist;
wobei ausgehend von der Ausgangsstellung (8) durch ein Verlagern des Betätigungsknopfes (7) entlang einer axialen ersten Richtung (10) um eine erste Strecke (11) ein zweiter Haltemechanismus (12) der Ventileinheit (2) betätigbar ist, durch den die Ventileinheit (2) zwischen der ersten Stellung und der zweiten Stellung schaltbar ist; wobei der erste Haltemechanismus (9) eine erste Feder (13) und der zweite Haltemechanismus (12) eine zweite Feder (14) aufweist, die in der Ausgangsstellung (8) und in der ersten Stellung jeweils gegenüber der axialen Richtung (10, 16) vorgespannt sind; wobei sich durch die Betätigung des zweiten Haltemechanismus (12) die zweite Feder (14) zumindest teilweise entspannt und damit zumindest einen Teil (15) der Ventileinheit (2) entlang einer axialen zweiten Richtung (16) um eine zweite Strecke (17) verlagert und so die Ventileinheit (2) schaltet; wobei durch die Entspannung der zweiten Feder (14) der erste Haltemechanismus (9) betätigbar ist und sich damit die erste Feder (13) zumindest teilweise entspannt und damit den Betätigungsknopf (7) entlang der axialen zweiten Richtung (16) um eine dritte Strecke (18) hin zu einer Betätigungsstellung (19) verlagert.

2. Ventil (1) nach Patentanspruch 1, wobei zumindest die dritte Strecke (18) größer ist als die zweite Strecke (17) oder die zweite Strecke (17) größer ist als die erste Strecke (11).

3. Ventil (1) nach einem der vorhergehenden Patentansprüche, wobei der Betätigungsknopf (7) in der Betätigungsstellung (19) gegenüber der Ausgangsstellung (8) um mindestens 10 Millimeter entlang der axialen zweiten Richtung (16) verlagert ist.

4. Ventil (1) nach einem der vorhergehenden Patentansprüche, wobei ausgehend von der Betätigungsstellung (19) der Betätigungsknopf (7) entlang der ersten axialen Richtung (10) um zumindest die dritte Strecke (18) und um die zweite Strecke (17) verlagerbar ist und dabei die erste Feder (13) und die zweite Feder (14) vorspannt sowie die Ventileinheit (2) in die erste Stellung überführt.

5. Ventil (1) nach einem der vorhergehenden Patentansprüche, wobei der erste Haltemechanismus (9) einen Magneten (20) sowie eine Metallscheibe (21) umfasst, wobei eine magnetische Kraft zwischen Magnet (20) und Metallscheibe (21) größer ist als die Vorspannung der ersten Feder (13).

6. Ventil (1) nach Patentanspruch 5, wobei eine Summe der Vorspannungen der ersten Feder (13) und der zweiten Feder (14) größer ist als die magnetische Kraft.

7. Ventil (1) nach einem der vorhergehenden Patentansprüche 5 und 6, wobei der Magnet (20) mit dem Betätigungsknopf (7) verbunden ist und die Metallscheibe (21) durch einen Anschlag (22) zumindest gegenüber der axialen zweiten Richtung (16) formschlüssig aber entlang der axialen Richtung (10, 16) verlagerbar in dem Drucktastengehäuse (6) aufgenommen ist; wobei die Metallscheibe (21) in der Ausgangstellung (8) den Magneten (20) kontaktiert und durch den Betätigungsknopf (7) entlang der axialen ersten Richtung (10) verlagerbar ist, wobei bei der Betätigung des zweiten Haltemechanismus (12) der Betätigungsknopf (7) und damit auch die Metallscheibe (21) durch die Entspannung der zweiten Feder (14) entlang der axialen zweiten Richtung (16) verlagerbar sind, wobei dabei die Metallscheibe (21) durch den Anschlag (22) zurückhaltbar ist, sich dadurch die Verbindung zwischen Magnet (20) und Metallscheibe (21) löst und der Betätigungsknopf (7) weiter entlang der axialen zweiten Richtung (16) verlagerbar ist.

8. Ventil (1) nach Patentanspruch 7, wobei ausgehend von der Betätigungsstellung (19) der Betätigungsknopf (7) entlang der axialen ersten Richtung (10) zumindest um die dritte Strecke (18) und die erste Strecke (11) verlagerbar ist und dabei die erste Feder (13) und die zweite Feder (14) vorspannt sowie die Ventileinheit (2) in die erste Stellung überführt; wobei dabei der Magnet (20) die Metallscheibe (21) kontaktiert und nach Rückverlagerung des Betätigungsknopfes (7) um die erste Strecke (11) die Metallscheibe (21) durch den Anschlag (22) zurückhaltbar ist.

9. Ventil (1) nach einem der vorhergehenden Patentansprüche, wobei das Ventil (1) eine Volumenstromregeleinheit (23) zur Einstellung eines Volumenstroms des Fluids in der zweiten Stellung aufweist; wobei die Volumenstromregeleinheit (23) ein drehbares Bedienteil (24) aufweist, dass mit dem Betätigungsknopf (7) über eine gegenüber einer Umfangsrichtung (25) formschlüssige Verbindung (26) verbunden ist, wobei das Bedienteil (24) über eine Gewindehülse (27) mit der Ventileinheit (2) verbunden ist, so dass durch eine Verdrehung des Bedienteils (24) ein Betätigungselement (28) der Ventileinheit (2) entlang der axialen Richtung (10, 16) zur Veränderung eines Durchströmungsquerschnitts (29) zwischen dem Zuflussanschluss (4) und dem Abflussanschluss (5) verlagerbar ist.

10. Ventil (1) nach einem der vorhergehenden Patentansprüche, wobei das Drucktastengehäuse (6) an einem Ende (30) eine Öffnung (33) aufweist, durch die hindurch der Betätigungsknopf (7) betätigbar ist; wobei der Betätigungsknopf (7) in der Ausgangsstellung (8) bündig mit dem Ende (30) abschließt und in der Betätigungsstellung (19) entlang der axialen Richtung (10, 16) um mindestens 10 Millimeter über das Ende (30) hervorsteht.

## Claims

1. A valve (1) for a sanitary fitting, at least comprising:
- a valve unit (2) with a valve housing (3), and an inflow connection (4), and an outflow connection (5) for transferring the fluid supplied via the inflow connection (4), wherein the inflow connection (4) and the outflow connection (5) are switchably connectable to each other by the valve unit (2), wherein the inflow connection (4) and the outflow connection (5) are fluidically separated from each other in a first position of the valve unit (2) and are connected to each other in a second position; and
- a pushbutton housing (6) which is connected to the valve housing (3) and has an actuating button (7) for switching the valve unit (2), wherein the actuating button (7) is held in a starting position (8) by a first holding mechanism (9);
wherein, starting from the starting position (8), by shifting the actuating button (7) by a first distance (11) along an axial first direction (10), a second holding mechanism (12) of the valve unit (2) can be actuated, by means of which the valve unit (2) can be switched between the first position and the second position; wherein the first holding mechanism (9) has a first spring (13) and the second holding mechanism (12) has a second spring (14) which are preloaded in the starting position (8) and in the first position in each case with respect to the axial direction (10, 16); wherein by actuating the second holding mechanism (12), the second spring (14) relaxes at least partially and thus shifts at least a part (15) of the valve unit (2) by a second distance (17) along an axial second direction (16) and thus switches the valve unit (2); wherein by the relaxing of the second spring (14), the first holding mechanism (9) can be actuated and the first spring (13) thus relaxes at least partially and thus shifts the actuating button (7) by a third distance (18) along the axial second direction (16) towards an actuating position (19).

2. The valve (1) according to claim 1, wherein at least the third distance (18) is greater than the second distance (17), or the second distance (17) is greater than the first distance (11).

3. The valve (1) according to any one of the preceding claims, wherein in the actuating position (19), the actuating button (7) is shifted with respect to the starting position (8) by at least 10 millimeters along the axial second direction (16).

4. The valve (1) according to any one of the preceding claims, wherein, starting from the actuating position (19), the actuating button (7) can be shifted by at least the third distance (18) and the second distance (17) along the first axial direction (10) and thereby preloads the first spring (13) and the second spring (14) and transfers the valve unit (2) into the first position.

5. The valve (1) according to any one of the preceding claims, wherein the first holding mechanism (9) comprises a magnet (20) and a metal disk (21), wherein a magnetic force between the magnet (20) and the metal disk (21) is greater than the preload of the first spring (13).

6. The valve (1) according to claim 5, wherein a sum of the preloads of the first spring (13) and of the second spring (14) is greater than the magnetic force.

7. The valve (1) according to any one of claims 5 and 6, wherein the magnet (20) is connected to the actuating button (7) and the metal disk (21) is accommodated in the pushbutton housing (6) such that it is positively locked by means of a stop (22), at least with respect to the axial second direction (16), but can be shifted along the axial direction (10, 16); wherein, in the starting position (8), the metal disk (21) comes into contact with the magnet (20) and can be shifted by the actuating button (7) along the axial first direction (10), wherein upon actuation of the second holding mechanism (12), the actuating button (7) and thus also the metal disk (21) can be shifted along the axial second direction (16) by the relaxing of the second spring (14), wherein, in doing so, the metal disk (21) can be held back by the stop (22) and, as a result, the connection between the magnet (20) and the metal disk (21) is released and the actuating button (7) can be shifted further along the axial second direction (16).

8. The valve (1) according to claim 7, wherein, starting from the actuating position (19), the actuating button (7) can be shifted at least by the third distance (18) and the first distance (11) along the axial first direction (10) and thereby preloads the first spring (13) and the second spring (14) and also transfers the valve unit (2) into the first position; wherein, in doing so, the magnet (20) comes into contact with the metal disk (21) and, after the actuating button (7) has been shifted back by the first distance (11), the metal disk (21) can be held back by the stop (22).

9. The valve (1) according to any one of the preceding claims, wherein the valve (1) has a volume flow control unit (23) for adjusting a volume flow of the fluid in the second position; wherein the volume flow control unit (23) has a turnable operating element (24) that is connected to the actuating button (7) via a positive connection (26) with respect to a circumferential direction (25), wherein the operating element (24) is connected to the valve unit (2) via a threaded sleeve (27) so that by turning the operating element (24), an actuating element (28) of the valve unit (2) can be shifted along the axial direction (10, 16) in order to change a flow cross-section (29) between the inflow connection (4) and the outflow connection (5).

10. The valve (1) according to any one of the preceding claims, wherein the pushbutton housing (6) has an opening (33) at one end (30), through which opening the actuating button (7) can be actuated; wherein, in the starting position (8), the actuating button (7) is flush with the end (30) and, in the actuating position (19), projects at least 10 millimeters beyond the end (30) along the axial direction (10, 16).

## Revendications

1. Valve (1) pour une robinetterie sanitaire, comportant au moins :
- une unité de valve (2), dotée d'un corps (3) de valve et d'un raccord d'arrivée (4), ainsi que d'un raccord d'évacuation (5) destiné à réacheminer le fluide alimenté par l'intermédiaire du raccord d'arrivée (4), le raccord d'arrivée (4) et le raccord d'évacuation (5) étant susceptibles d'être reliés l'un à l'autre de manière commutable par l'unité de valve (2), dans une première position de l'unité de valve (2), le raccord d'arrivée (4) et le raccord d'évacuation (5) étant séparés l'un de l'autre et dans une deuxième position, étant reliés l'un avec l'autre du point de vue fluidique ; et
- un boîtier à bouton-poussoir (6), qui est relié avec le corps (3) de valve et qui comporte un bouton d'actionnement (7), destiné à commuter l'unité de valve (2), dans une position de départ (8), le bouton d'actionnement (7) étant maintenu par un premier mécanisme de retenue (9) ;
en partant de la position de départ (8), par un déplacement du bouton d'actionnement (7) le long d'une première direction (10) axiale de la valeur d'un premier trajet (11), un deuxième mécanisme de retenue (12) de l'unité de valve (2), par lequel l'unité de valve (2) est commutable entre la première position et la deuxième position étant actionnable ; le premier mécanisme de retenue (9) comportant un premier ressort (13) et le deuxième mécanisme de retenue (12) comportant un deuxième ressort (14), qui dans la position de départ (8) et dans la première position sont respectivement précontraints par rapport à la direction axiale (10, 16) ; par l'actionnement du deuxième mécanisme de retenue (12), le deuxième ressort (14) se détendant au moins partiellement et déplaçant ainsi au moins une partie (15) de l'unité de valve (2) de la valeur d'un deuxième trajet (17) le long d'une deuxième direction (16) axiale et commutant de la sorte l'unité de valve (2) ; par la détente du deuxième ressort (14), le premier mécanisme de retenue (9) étant actionnable et de ce fait, le premier ressort (13) se détendant au moins partiellement et déplaçant ainsi le bouton d'actionnement (7) de la valeur d'un troisième trajet (18) le long de la deuxième direction (16) axiale, vers une position d'actionnement (19).

2. Valve (1) selon la revendication 1 du brevet, au moins le troisième trajet (18) étant supérieur au deuxième trajet (17) ou le deuxième trajet (17) étant supérieur au premier trajet (11).

3. Valve (1) selon l'une quelconque des revendications précédentes du brevet, dans la position d'actionnement (19), le bouton d'actionnement (7) étant déplacé par rapport à la position de départ (8) de la valeur d'au moins 10 millimètres le long de la deuxième direction (16) axiale.

4. Valve (1) selon l'une quelconque des revendications précédentes du brevet, en partant de la position d'actionnement (19), le bouton d'actionnement (7) étant déplaçable le long de la première direction (10) axiale de la valeur d'au moins le troisième trajet (18) et de la valeur du deuxième trajet (17) et précontraignant à cet effet le premier ressort (13) et le deuxième ressort (14) et transférant l'unité de valve (2) dans la première position.

5. Valve (1) selon l'une quelconque des revendications précédentes du brevet, le premier mécanisme de retenue (9) comprenant un aimant (20), ainsi qu'un disque métallique (21), une force magnétique entre l'aimant (20) et le disque métallique (21) étant supérieure à la précontrainte du premier ressort (13).

6. Valve (1) selon la revendication 5 du brevet, une somme des précontraintes du premier ressort (13) et du deuxième ressort (14) étant supérieure à la force magnétique.

7. Valve (1) selon l'une quelconque des revendications 5 et 6 précédentes du brevet, l'aimant (20) étant relié avec le bouton d'actionnement (7) et le disque métallique (21) étant reçu dans le boîtier à bouton-poussoir (6) par complémentarité de forme par rapport à la deuxième direction (16) axiale par une butée (22), mais en étant déplaçable le long de la direction (10, 16) axiale ; dans la position de départ (8), le disque métallique (21) entrant en contact avec l'aimant (20) et étant déplaçable par le bouton d'actionnement (7) le long de la première direction (10) axiale, lors de l'actionnement du deuxième mécanisme de retenue (12), le bouton d'actionnement (7) et ainsi également le disque métallique (21) étant déplaçables par la détente du deuxième ressort (14) le long de la deuxième direction (16) axiale, à cet effet, le disque métallique (21) étant susceptible d'être retenu par la butée (22), de ce fait, la liaison entre l'aimant (20) et le disque métallique (21) se désolidarisant et le bouton d'actionnement (7) étant déplaçable plus loin le long de la deuxième direction (16) axiale.

8. Valve (1) selon la revendication 7, en partant de la position d'actionnement (19), le bouton d'actionnement (7) étant déplaçable le long de la première direction (10) axiale au moins de la valeur du troisième trajet (18) et du premier trajet (11) et précontraignant ainsi le premier ressort (13) et le deuxième ressort (14) et transférant ainsi l'unité de valve (2) dans la première position ; à cet effet, l'aimant (20) entrant en contact avec le disque métallique (21) et après déplacement en retour du bouton d'actionnement (7) de la valeur du premier trajet (11), le disque métallique (21) étant susceptible d'être retenu par la butée (22).

9. Valve (1) selon l'une quelconque des revendications précédentes du brevet, la valve (1) comportant une unité de régulation (23) du débit volumique, destinée à régler un débit volumique du fluide dans la deuxième position ; l'unité de régulation (23) du débit volumique comportant une pièce de commande (24) rotative, qui est reliée avec le bouton d'actionnement (7) par l'intermédiaire d'une liaison (26) à complémentarité de forme par rapport à une direction périphérique (25), la pièce de commande (24) étant reliée par l'intermédiaire d'une douille filetée (27) avec l'unité de valve (2), de sorte que sous l'effet d'une rotation exercée sur la pièce de commande (24), un élément d'actionnement (28) de l'unité de valve (2) soit déplaçable le long de la direction (10, 16) axiale, pour faire varier une section transversale de circulation (29) entre le raccord d'arrivée (4) et le raccord d'évacuation (5).

10. Valve (1) selon l'une quelconque des revendications précédentes du brevet, le boîtier à bouton-poussoir (6) comportant sur une extrémité (30) un orifice (33), à travers lequel le bouton d'actionnement (7) est actionnable ; dans la position de départ (8), le bouton d'actionnement (7) se terminant à fleur avec l'extrémité (30) et dans la position d'actionnement (19), débordant dans la direction (10, 16) axiale de la valeur d'au moins 10 millimètres au-delà de l'extrémité (30).
